# EUROPÄISCHE PATENTSCHRIFT

(11) **EP 1 705 312 B1**
(45) Veröffentlichungstag und Bekanntmachung des Hinweises auf die Patenterteilung: **03.06.2009**
(21) Anmeldenummer: 06005488.9
(22) Anmeldetag: 17.03.2006
(51) Int. Cl.: E04F 19/06, E04F 11/16

(54) **Profilschienensystem**
Profile system
Système de profilés

(30) Priorität: 19.03.2005 DE 202005004624 U
(43) Veröffentlichungstag der Anmeldung: 27.09.2006
(73) Patentinhaber: Herm. Friedr. Künne GmbH & Co., 58513 Lüdenscheid (DE)
(72) Erfinder: Sondermann, Frank, 57489 Drolshagen (DE)
(74) Vertreter: Witzany, Manfred

(56) Entgegenhaltungen:
- EP-A- 1 403 444
- EP-A1- 0 711 886
- DE-U1-6202004 000 70
- DE-U1-4202005 004 62

## Beschreibung

Die Erfindung betrifft ein Profilschienensystem gemäß dem Oberbegriff des Patentanspruchs 1.

Aus der EP 0 711 886 A1 ist eine Fußbodenabdeckvorrichtung, bestehend aus einem Basisprofil und einem Deckprofil, bekannt. Das Basisprofil weist einen Gelenkkopf auf, der vom Deckprofil mittels koaxial kreiszylindrisch gewölbten Wänden übergriffen wird. Auf diese Weise ergibt sich eine Verschwenkbarkeit des Abdeckprofils.

Aus der DE 20 2004 000 706 U1 ist ein weiteres Profilschienensystem zur Überbrückung von Bodenbelagsübergängen bekannt. Dieses besteht aus einem Basisprofil, an dem eine Gelenkachse höhenverstellbar gehalten ist. Auf diese Gelenkachse ist seitlich ein Deckprofil aufschiebbar, welches Wände mit teilzylindrischer Innenkontur aufweist. Auf diese Weise ergibt sich eine Schwenklagerung des Abdeckprofils gegenüber dem Basisprofil.

Aus der EP 1 403 444 A1 ist ein weiteres Profilschienensystem bekannt, welches von einem Basisprofil und einem Deckprofil gebildet ist. Im Basisprofil ist eine Gelenkachse gehalten, die von teilzylindrisch gewölbten Stegen des Deckprofils umgriffen wird. Auf diese Weise ergibt sich ein Schwenklager für das Deckprofil.

Der Erfindung liegt die Aufgabe zugrunde, ein Profilschienensystem der eingangs genannten Art zu schaffen, das sich durch eine verbesserte Montage auszeichnet.

Diese Aufgabe wird erfindungsgemäß mit den Merkmalen des Patentanspruchs 1 gelöst.

Das Profilschienensystem gemäß Anspruch 1 dient zur Überbrückung von Bodenbelagsübergängen, -abschlüssen bzw. Treppenkanten. Das Profilschienensystem wird im wesentlichen von einem Deckprofil gebildet, dem ggf. ein Basisprofil zugeordnet ist. Das Deckprofil kann auch einstückig mit dem Basisprofil verbunden sein. Das Basisprofil wird üblicherweise unmittelbar am Boden festgelegt. Hierfür sind verschiedene Methoden möglich. Beispielsweise könnte das Basisprofil auf dem Boden festgeschraubt oder festgeklebt sein. Alternativ könnte das Basisprofil mit einem Steg auch unter die Bodenbelagselemente greifen, so daß zusammen mit dem Deckprofil ein Klemmgriff entsteht. Gegebenenfalls könnte zwischen dem Basisprofil und dem Deckprofil ein Verbindungsteil vorgesehen sein, durch das eine zusätzliche Anpassung an unterschiedliche Bodenbelagsdicken möglich ist. Damit das Profilschienensystem den Bodenbelagsrand überdecken kann, besitzt es mindestens einen Abdeckflügel. Dieser Abdeckflügel ist federnd gegen den Bodenbelag gedrückt. Auf diese Weise ist gewährleistet, daß der Abdeckflügel satt auf den Bodenbelagselementen anliegt und insbesondere keine Lockerung des Profilschienensystems bei Trittbelastungen eintritt. Außerdem hat der federnde Abdeckflügel den besonderen Vorteil, daß in die Fuge unterhalb des Abdeckflügels auch nachträglich beispielsweise Kabel oder dergleichen verlegt werden können. Hierzu wird lediglich der Abdeckflügel gegen die Kraft der mindestens einen Feder angehoben und das Kabel verlegt. Anschließend wird der Abdeckflügel wieder in seine Abdeckstellung verschwenkt, so daß die Fuge verdeckt ist. Es spielt dabei grundsätzlich keine Rolle, ob das gesamte Deckprofil oder nur dessen Abdeckflügel verstellbar und federnd vorgespannt sind. Die gewünschte Wirkung tritt in beiden Fällen ein, so daß der Fachmann für den jeweils konkreten Anwendungsfall die geeignete Konstruktion wählen kann. Um insbesondere Revisionsarbeiten zu erleichtern, ist die mindestens eine Feder bistabil ausgebildet. Dabei ist insbesondere daran gedacht, daß die mindestens eine Feder den Abdeckflügel bzw. das Deckprofil einerseits in eine den Abdeckflügel gegen den Bodenbelag drückende Abdecklage und andererseits in eine nach oben verstellte Montagestellung drückt. Zwischen beiden Stellungen ist ein Totpunkt vorgesehen, der überwunden werden muß, um die jeweils andere Stellung einnehmen zu können. Diese Maßnahme erleichtert auch die Montage des Profilschienensystems, da die Abdeckflügel bzw. das Deckprofil bei der Montage in der Montagestellung bleiben können, ohne daß diese hierzu gesondert blockiert werden müßten. Außerdem kann der Abdeckflügel auch schwimmend verlegte Böden gut arretieren, ohne weitere Befestigungsmaßnahmen zu erfordern.

Soll nur der Abdeckflügel verstellt werden, so ist es gemäß Anspruch 2 günstig, wenn dieser über ein Schwenklager verschwenkbar am Deckprofil gehalten ist. Die mindestens eine Feder belastet den Abdeckflügel in diesem Fall in Schwenkrichtung derart, daß das freie Ende des Abdeckflügels gegen den Bodenbelag gedrückt wird. Vorzugsweise ist das Schwenklager derart ausgebildet, daß es eine extrudierbare Form besitzt. Auf diese Weise lassen sich das Deckprofil und der Abdeckflügel besonders einfach und damit kostengünstig herstellen. Diese Ausbildung des Deckprofils hat insbesondere bei Deckprofilen mit zwei Abdeckflügeln den besonderen Vorteil, daß beide Abdeckflügel durch Federkraft unabhängig voneinander gegen den jeweiligen Bodenbelag gedrückt werden. Auf diese Weise werden unterschiedliche Belägshöhen automatisch und ohne gesonderte Justier- und Anpaßmaßnahmen ausgeglichen. Um zu einem späteren Zeitpunkt beispielsweise ein Kabel in die Fuge, in der das Profilschienensystem festgelegt ist, einlegen zu können, genügt es außerdem, nur jeweils einen der Abdeckflügel hochzuschwenken, während der andere Abdeckflügel in seiner Abdecklage verbleibt. Spätere Revisionsarbeiten sind daher besonders einfach und leicht durchzuführen.

Alternativ oder zusätzlich kann das Deckprofil gemäß Anspruch 3 gegenüber dem Basisprofil höhenverstellbar gehalten sein. Diese Ausbildung ist insbesondere bei Deckprofilen mit einseitigem Abdeckflügel vorzuziehen, da in diesem Fall keine individuelle Höheneinstellung der einzelnen Abdeckflügel erforderlich ist.

Insbesondere ist daran gedacht, das Deckprofil samt dem mindestens einen Abdeckflügel vor der Festlegung des Basisprofils mit diesem zu verbinden, so daß die Montage des gesamten Profilschienensystems in der Fuge erfolgen kann. In der Montagestellung des mindestens einen Abdeckflügels ist diese Montage ungehindert möglich. Damit entfällt auf der Baustelle ein umständliches Zusammenstellen der einzelnen Profile. Gemäß Anspruch 4 ist es günstig, wenn das Deckprofil bzw. der Abdeckflügel zwischen einer mit Vorspannung gegen den Bodenbelag drückenden Abdeckstellung und einer den Raum unter dem Abdeckflügel freigebenden Montagestellung verstellbar ist.

Insbesondere bei einer Schwenklagerung des Abdeckflügels ist es gemäß Anspruch 5 günstig, wenn die mindestens eine Feder einerseits am mindestens einen Abdeckflügel und andererseits am Deckprofil angreift. Auf diese Weise wird erreicht, daß die Federwirkung unabhängig von einer ggf. vorgesehenen Höhenverstellbarkeit des Deckprofils immer gleich wirkt.

Eine bevorzugte Weiterbildung des Profilschiehensystems ergibt sich aus Anspruch 6. Dabei greift die Feder in Nuten des Abdeckprofils bzw. Deckprofils ein und wird darin ausreichend sicher gehalten. Wenigstens eine dieser Nuten ist dabei im spitzen Winkel zur Bodenbelagsebene ausgerichtet, so daß die Feder je nach Schwenkwinkel des Abdeckflügels unterschiedlich tief in die Nut eingreifen kann. Auf diese Weise wird ein einfacher Totpunkt für die Verschwenkung des Abdeckflügels realisiert. Insbesondere ist daran gedacht, daß die Nut derart ausgebildet ist, daß die Feder in der Montagestellung tiefer in die Nut eingreift als in der Abdeckstellung. Als günstiger Nebeneffekt ergibt sich dabei, daß die Andrückkraft des Abdeckflügels gegen den Bodenbelag größer ist als gegen den Anschlag in der Montagestellung. Zusätzlich ist es günstig, wenn die Nuten vom Schwenklager beabstandet sind. Auf diese Weise ergibt sich für die Feder ein vergrößerter Verstellweg bei Verschwenken des Abdeckflügels, was zu einer entsprechend vergrößerten Federspannung und damit einer hohen Anpreßkraft des Abdeckflügels am Bodenbelag führt.

Alternativ ist es zur Erzielung einer möglichst einfachen Realisierung des Profilschienensystems gemäß Anspruch 7 günstig, wenn die am Abdeckflügel vorgesehene Nut in das Schwenklager für den mindestens einen Abdeckflügel eingeformt ist. Auf diese Weise ergibt sich ein besonders kompakter Aufbau des Deckprofils.

Insbesondere bei höhenverstellbarem Deckprofil ist es gemäß Anspruch 8 vorteilhaft, wenn die mindestens eine Feder einerseits am Deckprofil und andererseits am Basisprofil bzw. einem gesonderten Verbindungsteil angreift. Auf diese Weise kann die mindestens eine Feder sehr leicht das Deckprofil gegen das Basisprofil ziehen, um den mindestens einen Abdeckflügel gegen den Bodenbelag zu drücken.

Eine besonders effektive Realisierung des gewünschten Totpunkts ergibt sich gemäß Anspruch 9, indem am Basisprofil, am Deckprofil und/oder am Abdeckflügel mindestens eine Kulisse vorgesehen ist. Diese Kulisse wird von mindestens einem Taster abgetastet, der axial federnd vorgespannt ist. Auf diese Weise kann mit Hilfe der Kulisse sehr einfach die gewünschte Kraftwirkung eingestellt werden. Damit der Abdeckflügel bzw. das Deckprofil in der Montagestellung verbleibt, übt die Kulisse in mindestens einem Bereich keine Verstellkraft auf den Taster aus. Dies kann beispielsweise durch einen Anschlag oder dgl. realisiert werden.

Zur Erzielung einer symmetrischen Kraftverteilung ist es gemäß Anspruch 10 günstig, wenn mindestens zwei der Kulissen gegeneinander gerichtet angeordnet sind. Zwischen beiden Kulissen ist der Taster angeordnet, der in diesem Fall axial teleskopierbar ist und beide Kulissen abtastet.

Eine einfache alternative Realisierung einer bistabilen Feder ergibt sich aus Anspruch 11. Dabei ist die mindestens eine Feder von einer quer zur Biegerichtung gekrümmten Blattfeder gebildet. Eine derartige Blattfeder besitzt zwei stabile Formen, zwischen denen ein Tötpumkt vorgesehen ist. Die beiden stabilen Formen der Blattfeder sind dabei derart gewählt, daß die Abdeck- und Montagestellung innerhalb der beiden stabilen Lagen jedoch beidseits des Totpunkts vorgesehen sind.

Zur Erzielung einer universellen Anwendbarkeit des Profilschienensystems ist es gemäß Anspruch 12 vorteilhaft, wenn das Deckprofil gegenüber dem Basisprofil zusätzlich höhenverstellbar und/oder verschwenkbar gehalten ist.

Schließlich ist es günstig, wenn mindestens zwei Abdeckflügel vorgesehen sind, die sich zumindest in der Abdeckstellung überlappen. Die beiden Abdeckflügel sind dabei vorzugsweise gegeneinander verschwenkbar, wobei das Deckprofil an dem sie festgelegt sind, keinerlei Abdeckfunktion besitzt. In der Abdeckstellung sind damit nur die Abdeckflügel von oben zu sehen, so daß die Öberflächengestaltung des Deckprofils in beliebiger Weise erfolgen kann. Dies erleichtert insbesondere die Lagerhaltung für das Deckprofil, da ein Deckprofil für unterschiedlichste Böden eingesetzt werden kann.

Der Erfindungsgegenstand wird beispielhaft anhand der Zeichnung erläutert, ohne den Schutzumfang zu beschränken.

Es zeigt:
- Figur 1: eine Querschnittsdarstellung eines Profilschienensystems mit einem Abdeckflügel in der Abdeckstellung,
- Figur 2: das Profilschienensystem gemäß Figur 1 in der Montagestellung,
- Figur 3: ein Profilschienensystem mit zwei Abdeckflügeln in der Abdeckstellung,
- Figur 4: eine alternative Ausführungsform des Profilschienensystems in der Abdeckstellung,
- Figur 5: eine zugeordnete Schnittdarstellung durch das Profilschienensystem gemäß Figur 4 entlang der Schnittlinie V-V,
- Figur 6: das Profilschienensystem gemäß Figur 4 in der Montagestellung,
- Figur 7: eine zugeordnete Schnittdarstellung entlang der Schnittlinie VII-VII,
- Figur 8: eine Querschnittsdarstellung einer weiteren alternativen Ausführungsform des Profilschienensystems und
- Figur 9: eine Querschnittsdarstellung einer abgewandelten Ausführungsform des Profilschienensystems gemäß Figur 8.

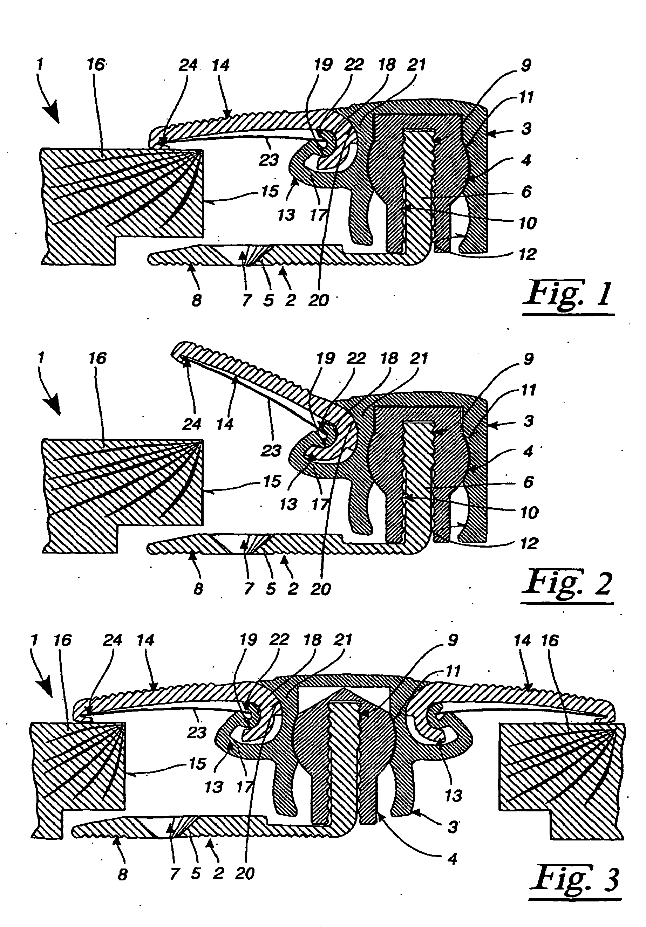

Ein Profilschienensystem 1 gemäß Figur 1 besteht aus einem Basisprofil 2 und einem Deckprofil 3. Im vorliegenden Ausführungsbeispiel ist zwischen beiden Profilen 2, 3 noch ein Verbindungsteil 4 vorgesehen, welches für einen sicheren Halt des Deckprofils 3 am Basisprofil 2 sorgt.

Das Basisprofil 2 ist im wesentlichen L-förmig ausgebildet und weist einen horizontalen Querschenkel 5 und einen vertikalen Längsschenkel 6 auf. Der Querschenkel 5 ist mit einer Reihe von Bohrungen 7 versehen, die zur Aufnahme von nicht dargestellten Schrauben dienen. Mit diesen Schrauben kann das Basisprofil 2 problemlos am Untergrund festgelegt werden. Insbesondere ist daran gedacht, die Schraube direkt in den Untergrund zu treiben oder insbesondere bei mineralischem Untergrund einen Dübel als Verbindungsteil zu setzen.

Als weitere Alternative könnte das Basisprofil 2 auch mit dem Untergrund verklebt werden. Zu diesem Zweck weist der Querschenkel 5 eine Reihe von Nuten 8 auf, die sich mit Klebstoff füllen können. Auf diese Weise ergibt sich eine besonders sichere Kleberverbindung zum Untergrund. Der Längsschenkel 6 ist im oberen Bereich mit einer wellenartigen Oberfläche 9 versehen, die für eine rastartige Höhenverstellbarkeit des Deckprofils 3 dient.

Auf dem Längsschenkel 6 ist das Verbindungsteil 4 aufgesteckt, das eine zur wellenartigen Oberfläche 9 passende Innenkontur 10 aufweist. Damit kann das Verbindungsteil 4 um eine gewisse Anzahl von Wellen gegenüber dem Basisprofil 2 verstellt werden. Diese Art der Verstellung dient insbesondere zur Anpassung an unterschiedliche Bodenbelagsdicken. Das Verbindungsteil 4 besitzt in seinem oberen Bereich eine zylindrische Außenkontur 11, die die Verbindung zum Deckprofil 3 herstellt.

Das Deckprofil 3 besitzt eine Innenkontur 12, die an die Außenkontur 11 des Verbindungsteils 4 angepaßt ist. Diese Innenkontur 12 wird von zwei übereinander angeordneten teilzylindrischen Konturen gebildet. Die Konturen 11, 12 ermöglichen es, das Deckprofil 3 in zwei unterschiedlichen Höhen auf das Verbindungsteil 4 aufzuschieben, um auch hierdurch eine weitere Höhenverstellbarkeit zu erzielen.

Am Deckprofil 3 ist ein Schwenklager 13 vorgesehen, das einen Abdeckflügel 14 verschwenkbar aufnimmt. Dieser Abdeckflügel 14 übergreift ein Bodenbelagsende 15 und liegt satt auf einem Bodenbelag 16 auf. Das Schwenklager 13 wird von einem seitlich über das Deckprofil 3 überstehenden Arm 17 gebildet, an dessen Ende eine zylindrische, innere Lagerschale 18 vorgesehen ist. Diese zylindrische Lagerschale 18 wird von einer zylindrischen Innenkontur 19 des Abdeckflügels 14 erfaßt. Zusätzlich ist im Deckprofil 3 eine zylindrische Innenkontur 20 eingeformt, die Teil einer äußeren Lagerschale 21 ist. Demnach ist der Abdeckflügel 14 durch die beiden Lagerschalen 18, 21 ausreichend sicher gelagert, so daß ein Eingriff des Abdeckflügels 14 in das Schwenklager 13 um mehr als 180° zur Erzielung einer sicheren Haltewirkung entbehrlich ist.

In der inneren Lagerschale 18 ist außerdem eine Nut 22 eingeformt, die mindestens eine Blattfeder 23 aufnimmt. Bei langen Profilschienen ist daran gedacht, mehrere Blattfedern 23 über deren Länge zu verteilen, um eine gleichmäßige Schwenkkraft zu erzielen. Die Blattfeder 23 ist an ihrem Gegenende in einer weiteren Nut 24 des Abdeckflügels 14 gehalten. Die Nut 22 der Lagerschale 18 ist dabei spitzwinkelig zur Ebenenerstreckung des Bodenbelags 16 angeordnet, so daß die Feder 23 je nach Schwenklage des Abdeckflügels 14 unterschiedlich tief in die Nut 22 eingreifen kann. Auf diese Weise wird ein Totpunkt realisiert, der überwunden werden muß, um den Abdeckflügel 14 von der dargestellten Abdeckstellung in die Montagestellung gemäß Figur 2 zu überführen.

Figur 2 zeigt das Profilschienensystem 1 gemäß Figur 1 in der Montagestellung. Dabei ist zu erkennen, daß die mindestens eine Feder 23 wesentlich tiefer in die Nut 22 eindringt, wodurch sich die Kraftrichtung der Feder 23 umdreht. In dieser Stellung wird der Abdeckflügel 14 durch die Kraftwirkung der Feder 23 nach oben gedrückt, bis er an einem vom Arm 17 gebildeten Anschlag anliegt. In dieser Stellung kann beispielsweise sehr einfach eine Leitung in den Freiraum unter dem Abdeckflügel 14 verlegt werden. Außerdem ist es denkbar, in dieser Stellung das Basisprofil 2 am Boden festzulegen, da die nicht dargestellten Schrauben in dieser Lage frei zugänglich sind.

Figur 3 zeigt eine alternative Ausführungsform des Profilschienensystems gemäß Figur 1, wobei gleiche Bezugszeichen gleiche Teile benennen. Der wesentliche Unterschied zum Profilschienensystem 1 gemäß Figur 1 besteht in der Ausbildung des Deckprofils 3 mit zwei Abdeckflügeln 14. Konsequenterweise weist das Deckprofil 3 aus diesem Grund zwei Schwenklager 13 und Federn 23 für beide Abdeckflügel 14 auf.

Die Konturen 11, 12 erlauben eine begrenzte Verschwenkung des Deckprofils 3 gegenüber dem Basisprofil 2. Außerdem kann das Deckprofil 3 im zwei unterschiedlichen Höhen auf das Verbindungsteil 4 aufgeschoben werden, um auch hierdurch eine weitere Höhenverstellbarkeit zu erzielen.

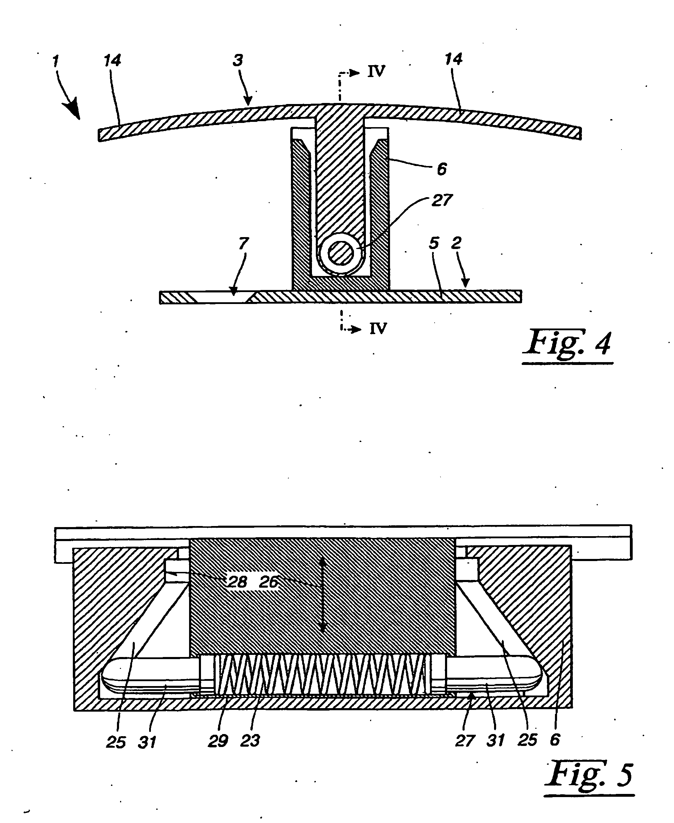

Figur 4 zeigt eine alternative Ausführungsform des Profilschienensystems gemäß Figur 1, wobei gleiche Bezugszeichen wieder gleiche Teile benennen. Bei dieser Ausführungsform ist der mindestens eine Abdeckflügel 14 fest mit dem Deckprofil 3 verbunden. Statt die Abdeckflügel 14 verschwenkbar auszubilden, ist in diesem Fall das gesamte Deckprofil 3 höhenverstellbar mit dem Basisprofil 2 verbunden.

Zur Erzielung der gewünschten Federwirkung ist im Längsschenkel 6 des Basisprofils 2 ein Mechanismus vorgesehen, der im folgenden anhand der Figur 5 näher erläutert wird.

Der Längsschenkel 6 gemäß Figur 5 weist innenseitig Kulissen 25 auf, die selbstzentrierend ausgebildet sind. Diese Kulissen 25 sind nahezu über die gesamte Länge im spitzen Winkel zur Verschiebungsrichtung 26 angestellt und übersetzen die horizontale Kraft eines Tasters 27 in eine vertikale Zugkraft, die das Deckprofil 3 nach unten zieht. Lediglich im oberen Endbereich 28 ist die Kulisse 25 parallel zur Verschiebungsrichtung 26 ausgerichtet, so daß der Taster 27 in diesem Bereich keine vertikale Kraft auf das Deckprofil 3 ausübt. In diesem oberen Endbereich 28 ist demnach die Lage des Deckprofils 3 stabil, während in allen anderen Lagen das Deckprofil 3 mit den Abdeckschenkeln 14 gegen den Bodenbelag 16 gezogen wird.

Der Taster 27 besteht aus einem Rohr 29, in dem eine Spiralfeder 23 gehalten ist. Diese Spiralfeder 23 drückt zwei Tastköpfe 31 axial nach außen, wodurch der Taster 27 eine axiale Kraft gegen die Kulissen 25 ausübt. Diese axiale Kraft wird durch die Neigung der Kulissen 25 in die gewünschte vertikale Verstellkraft des Abdeckprofils 3 umgesetzt.

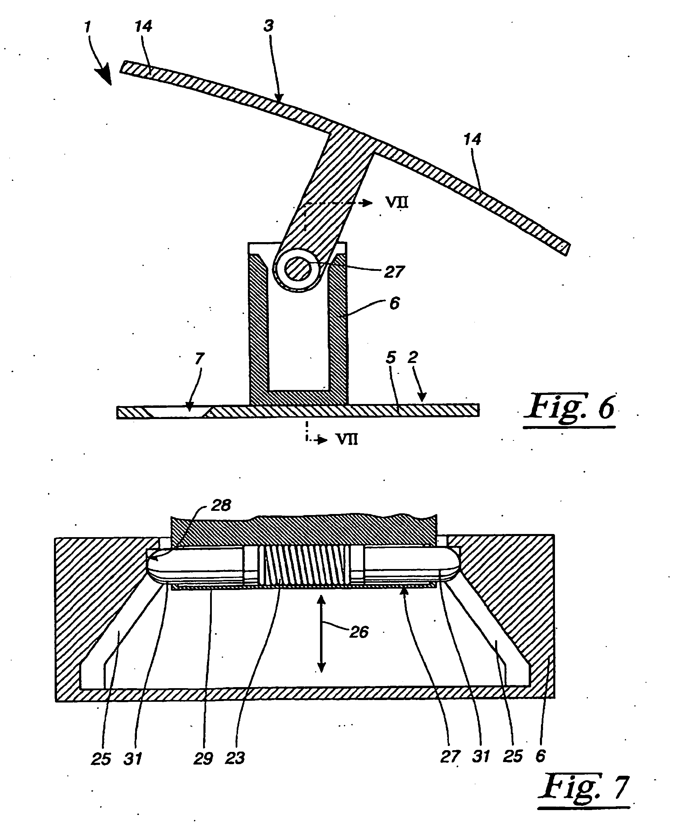

Die Figuren 6 und 7 zeigen das Profilschienensystem 1 gemäß den Figuren 4 und 5 in der Montagestellung. Dabei befindet sich der Taster 27 im Bereich des oberen Endes 28 der Kulissen 25, in der er in stabiler Lage verbleibt. In dieser Lage ist das mit dem Taster 27 verbundene Deckprofil weit nach oben verschoben und kann außerdem um den Taster 27 als Drehachse verschwenkt werden. Dies erleichtert den Zugang zum Freiraum unter den Abdeckflügeln 14.

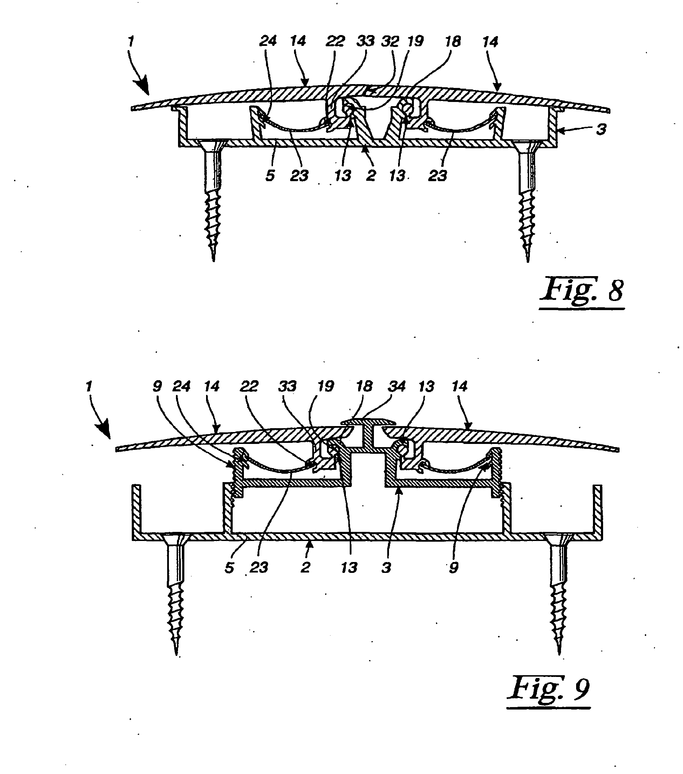

Die Figur 8 zeigt eine weitere alternative Ausführungsform des Profilschienensystems 1, wobei gleiche Bezugszeichen wieder gleiche Teile benennen. Die Ausbildung dieses Profilschienensystems 1 stellt eine weitere Abwandlung des Profilschienensystems 1 gemäß Figur 3 dar, wobei nur auf die Unterschiede zu diesem eingegangen wird.

Das Deckprofil 3 ist bei dieser Ausführungsform mit dem Basisprofil 2 einstückig verbunden, wobei dieses Profil 3 keinerlei Abdeckfunktion für die Belagsfuge übernimmt. Die Belagsfuge wird vielmehr vollständig von den beiden Abdeckflügeln 14 übernommen. Zu diesem Zweck überlappen sich die Abdeckschenkel 14 in der dargestellten Abdeckstellung. Diese Überlappung wird durch eine geringfügige Anschrägung 32 der zueinander gerichteten Stirnflächen der beiden Abdeckflügel 14 erzielt.

Um die Abdeckflügel trotz der gegenseitigen Überlappung in der Abedeckstellung verschwenken zu können, ist das Schwenklager 13 beider Abdeckflügel 14 über einen Steg 33 nach unten verlagert. Durch diese Maßnahme kann der Abdeckschenkel 14 auch das Schwenklager 13 überdecken, so daß das Deckprofil 3 in der dargestellten Abdeckstellung von oben nicht zu sehen ist. Die Anschrägung 32 ist vorzugsweise tangential zur Achse eines der beiden Schwenklager 13 ausgerichtet.

Am Steg 33 ist außerdem die Nut 22 angeformt, die die Feder 23 aufnimmt. Diese Nut 23 ist dabei vom Schwenklager 13 beabstandet, um auf diese Weise einen größeren Verstellweg für die Feder 23 zu realisieren. Das Gegenende der Feder 23 ist in der Nut 24 des Deckprofils 3 gehalten. Diese Nut 24 ist dabei schräg nach unten gerichtet, um die Feder 23 entsprechend vorzuspannen. Durch diese Maßnahmen ergibt sich eine verstärkte Federkraft in der Abdeckstellung, so daß der Abdeckflügel 14 entsprechend stark gegen den Bodenbelag 16 drückt.

Schließlich zeigt die Figur 9 eine alternative Ausführungsform des Profilschienensystems 1. Der Aufbau entspricht im wesentlichen dem Profilschienensystem 1 gemäß Figur 8, wobei im folgenden nur auf die Unterschiede eingegangen wird. Das Profilschienensystem 1 gemäß Figur 9 besteht aus dem Basisprofil 2 und dem als getrenntes Bauteil ausgebildeten Deckprofil 3. Das Deckprofil 3 ist im Basisprofil 2 höhenverstellbar gehalten, wobei beide Teile durch die wellenartige Oberfläche 9 des Längsschenkels 6 miteinander verrastet sind. Das Deckprofil 3 weist das Schwenklager 13 auf, in dem der Abdeckflügel 14 verschwenkbar abgestützt ist. Außerdem ist am Deckprofil 3 ein fester Abdeckflügel 34 angeformt, der den verschwenkbaren Abdeckflügel 14 überlappt.

### Bezugszeichenliste

- 1: Profilschienensystem
- 2: Basisprofil
- 3: Deckprofil
- 4: Verbindungsteil
- 5: Querschenkel
- 6: Längsschenkel
- 7: Bohrung
- 8: Nut
- 9: wellenartige Oberfläche
- 10: Innenkontur
- 11: Außenkontur
- 12: Innenkontur
- 13: Schwenklager
- 14: Abdeckflügel
- 15: Bodenbelagsende
- 16: Bodenbelag
- 17: Arm
- 18: Lagerschale
- 19: zylindrische Innenkontur
- 20: zylindrische Innenkontur
- 21: Lagerschale
- 22: Nut
- 23: Feder
- 24: Nut
- 25: Kulisse
- 26: Verschiebungsrichtung
- 27: Taster
- 28: oberer Endbereich
- 29: Rohr
- 31: Tastkopf
- 32: Anschrägung
- 33: Steg
- 34: Abdeckflügel

## Patentansprüche

1. Profilschienensystem zur Überbrückung von Bodenblagsübergängen, -abschlüssen und/oder Treppenkanten, wobei das Profilschienensystem (1) zumindest ein Deckprofil (3) aufweist, welches mindestens einen Abdeckflügel (14) besitzt, der ein Bodenbelagsende (15) übergreift, wobei das Deckprofil (3) und/oder mindestens einer der Abdeckflügel (14) verstellbar ist, **dadurch gekennzeichnet, daß** das Deckprofil (3) und/oder mindestens einer der Abdeckflügel (14) von mindestens einer als gesondertes Teil ausgebildeten, quer zur Biegerichtung gekrümmten Blattfeder und/oder bistabilen Feder (23) gegen den Bodenbelag (16) gedrückt ist.

2. Profilschienensystem nach Anspruch 1, **dadurch gekennzeichnet, daß** der mindestens eine Abdeckflügel (14) über ein Schwenklager (13) verschwenkbar am Deckprofil (3) gehalten ist.

3. Profilschienensystem nach Anspruch 1 oder 2, **dadurch gekennzeichnet, daß** das Deckprofil (3) gegenüber einem bodenseitig festgelegten Basisprofil (2) höhenverschiebbar gehalten und von mindestens einer Feder (23) in Verschieberichtung (26) belastet ist.

4. Profilschienensystem nach mindestens einem der Ansprüche 1 bis 3, **dadurch gekennzeichnet, daß** das Deckprofil (3) und/oder der Abdeckflügel (14) zwischen einer mit Vorspannung gegen den Bodenbelag (16) drückenden Abdeckstellung und einer den Raum unter dem Abdeckflügel (14) freigebenden Montagestellung verstellbar ist.

5. Profilschienensystem nach mindestens einem der Ansprüche 1 bis 4, **dadurch gekennzeichnet, daß** die mindestens eine Feder (23) einerseits an mindestens einem Abdeckflügel (14) und andererseits am Deckprofil (3) angreift.

6. Profilschienensystem nach Anspruch 5, **dadurch gekennzeichnet, daß** die mindestens eine Feder (23) in Nuten (22, 24) des Abdeckflügels (14) und/oder des Deckprofils (3) gehalten ist, von denen mindestens eine im spitzen Winkel zum Bodenbelag (16) ausgerichtet ist, so daß die mindestens eine Feder (23) je nach Schwenkwinkel des mindestens einen Abdeckflügels (14) unterschiedlich tief in die Nut (23, 24) eingreifen kann.

7. Profilschienensystem nach Anspruch 6, **dadurch gekennzeichnet, daß** die am Abdeckflügel (14) vorgesehene Nut (22) in das Schwenklager (13) für den mindestens einen Abdeckflügel (14) eingeformt ist.

8. Profilschienensystem nach mindestens einem der Ansprüche 1 bis 7, **dadurch gekennzeichnet, daß** die mindestens eine Feder (23) einerseits am Deckprofil (3) und andererseits an einem Basisprofil (2) oder an einem Verbindungteil (4) angreift, welches das Deckprofil (3) mit dem Basisprofil (2) verbindet.

9. Profilschienensystem nach mindestens einem der Ansprüche 1 bis 8, **dadurch gekennzeichnet, daß** am Basisprofil (2), am Deckprofil (3) und/oder Abdeckflügel (14) mindestens eine Kulisse (25) vorgesehen ist, die von mindestens einem axial federnd vorgespannten Taster (27) abgetastet ist, wobei die Kulisse (25) mindestens einen Bereich (28) aufweist, in dem der Taster (27) keine Verstellkraft für das Deckprofil (3) und den Abdeckflügel (14) erzeugt.

10. Profilschienensystem nach Anspruch 9, **dadurch gekennzeichnet, daß** mindestens zwei der Kulissen (25) gegeneinander gerichtet angeordnet sind, zwischen denen der Taster (27) axial teleskopierbar angeordnet ist.

11. Profilschienensystem nach mindestens einem der Ansprüche 3 bis, 10, **dadurch gekennzeichnet, daß** die mindestens eine Feder (23) von einer quer zur Biegerichtung gekrümmten Blattfeder gebildet ist.

12. Profilschienensystem nach mindestens einem der Ansprüche 3 bis 11, **dadurch gekennzeichnet, daß** das Deckprofil (3) gegenüber dem Basisprofil (2) zusätzlich höhenverstellbar und/oder verschwenkbar gehalten ist.

## Claims

1. Profile-rail system for bridging floor-covering transitions, terminations and/or stair or step edges, the profile-rail system (1) having at least one cover profile (3) which has at least one covering wing (14) which engages over a floor-covering end (15), **characterized in that** the cover profile (3) and/or at least one of the covering wings (14) being adjustable, **characterized in that** the cover profile (3) and/or at least one of the covering wings (14) are/is pushed against the floor covering (16) by at least one bistable spring (23) and/or leaf spring which is formed as a separate part and is curved transversely to the bending direction.

2. Profile-rail system according to Claim 1, **characterized in that** the at least one covering wing (14) is retained on the cover profile (3) such that it can be pivoted via a pivot bearing (13).

3. Profile-rail system according to Claim 1 or 2, **characterized in that** the cover profile (3) is retained such that it can be displaced in height in relation to a base profile (2) secured on the floor, and it is biased in the displacement direction (26) by at least one spring (23).

4. Profile-rail system according to at least one of Claims 1 to 3, **characterized in that** the cover profile (3) and/or the covering wing (14) can be adjusted between a covering position, in which they are pushed, with prestressing, against the floor covering (16), and an installation position, in which the space beneath the covering wing (14) is released.

5. Profile-rail system according to at least one of Claims 1 to 4, **characterized in that** the at least one spring (23) acts, on the one hand, on at least one covering wing (14) and, on the other hand, on the cover profile (3).

6. Profile-rail system according to Claim 5, **characterized in that** the at least one spring (23) is retained in grooves (22, 24) of the covering wing (14) and/or of the cover profile (3), of which at least one is oriented at an acute angle in relation to the floor covering (16), with the result that the at least one spring (23) can engage in the groove (22, 24) to different depths, depending on the pivoting angle of the at least one covering wing (14).

7. Profile-rail system according to Claim 6, **characterized in that** the groove (22) provided on the covering wing (14) is formed in the pivot bearing (13) for the at least one covering wing (14).

8. Profile-rail system according to at least one of Claims 1 to 7, **characterized in that** the at least one spring (23) acts, on the one hand, on the cover profile (3) and, on the other hand, on a base profile (2) or on a connecting part (4) which connects the cover profile (3) to the base profile (2).

9. Profile-rail system according to at least one of Claims 1 to 8, **characterized in that** at least one guide (25) is provided on the base profile (2), on the cover profile (3) and/or covering wing (14), at least one axially resiliently prestressed follower (27) following this guide, it being the case that the guide (25) has at least one region (28) in which the follower (27) does not produce any adjustment force for the cover profile (3) and the covering wing (14).

10. Profile-rail system according to Claim 9, **characterized in that** at least two of the guides (25) are directed toward one another, the follower (27) being arranged in an axially telescopic manner between the two guides.

11. Profile-rail system according to at least one of Claims 3 to 10, **characterized in that** the at least one spring (23) is formed by a leaf spring which is curved transversely to the bending direction.

12. Profile-rail system according to at least one of Claims 3 to 11, **characterized in that** the cover profile (3) is retained such that it can additionally be adjusted in height and/or pivoted in relation to the base profile (2).

## Revendications

1. Système de rails profilés destiné à recouvrir des transitions ou des terminaisons entre revêtements de sol, et/ou des bords d'escaliers, dans lequel le système de rails profilés (1) présente au moins un profilé de couverture (3) qui possède au moins un volet de recouvrement (14) qui vient en prise par le dessus avec une extrémité du revêtement de sol (15), le profilé de couverture (3) et/ou au moins l'un des volets de recouvrement (14) étant réglable, **caractérisé en ce que** le profilé de couverture (3) et/ou au moins l'un des volets de recouvrement (14) sont pressés contre le revêtement de sol (16) par au moins un ressort bistable (23) et/ou un ressort à lame réalisé en tant que pièce séparée, courbé transversalement à la direction de flexion.

2. Système de rails profilés selon la revendication 1, **caractérisé en ce que** l'au moins un volet de recouvrement (14) est maintenu par le biais d'un palier pivotant (13) de manière pivotante sur le profilé de couverture (3).

3. Système de rails profilés selon la revendication 1 ou 2, **caractérisé en ce que** le profilé de couverture (3) est maintenu de manière déplaçable en hauteur par rapport à un profilé de base (2) fixé du côté du sol, et est sollicité dans la direction de réglage (26) par au moins un ressort (23).

4. Système de rails profilés selon au moins l'une quelconque des revendications 1 à 3, **caractérisé en ce que** le profilé de couverture (3) et/ou le volet de recouvrement (14) peuvent être réglés entre une position de recouvrement pressant contre le revêtement de sol (16) avec une précontrainte, et une position de montage libérant l'espace sous le volet de recouvrement (14).

5. Système de rails profilés selon au moins l'une quelconque des revendications 1 à 4, **caractérisé en ce que** l'au moins un ressort (23) vient en prise d'une part avec au moins un volet de recouvrement (14) et d'autre part avec le profilé de couverture (3).

6. Système de rails profilés selon la revendication 5, **caractérisé en ce que** l'au moins un ressort (23) est maintenu dans des rainures (22, 24) du volet de recouvrement (14) et/ou du profilé de couverture (3), dont au moins un est orienté à angle aigu par rapport au revêtement de sol (16), de sorte que l'au moins un ressort (23) puisse venir en prise en fonction de l'angle de pivotement de l'au moins un volet de recouvrement (14) à une profondeur différente dans la rainure (23, 24).

7. Système de rails profilés selon la revendication 6, **caractérisé en ce que** la rainure (22) prévue sur le volet de recouvrement (14) est formée dans le palier pivotant (13) pour l'au moins un volet de recouvrement (14).

8. Système de rails profilés selon au moins l'une quelconque des revendications 1 à 7, **caractérisé en ce que** l'au moins un ressort (23) vient en prise d'une part avec le profilé de couverture (3) et d'autre part avec un profilé de base (2) ou avec une partie de connexion (4), qui relie le profilé de couverture (3) au profilé de base (2).

9. Système de rails profilés selon au moins l'une quelconque des revendications 1 à 8, **caractérisé en ce que** l'on prévoit sur le profilé de base (2), le profilé de couverture (3) et/ou le volet de recouvrement (14) au moins une coulisse (25) qui est balayée par au moins un palpeur (27) précontraint élastiquement axialement, la coulisse (25) présentant au moins une région (28) dans laquelle le palpeur (27) ne produit aucune force de réglage pour le profilé de couverture (3) et le volet de recouvrement (14).

10. Système de rails profilés selon la revendication 9, **caractérisé en ce qu'**au moins deux des coulisses (25) sont disposées de manière orientée l'une vers l'autre, et le palpeur (27) est disposé de manière télescopable axialement entre celles-ci .

11. Système de rails profilés selon au moins l'une quelconque des revendications 3 à 10, **caractérisé en ce que** l'au moins un ressort (23) est formé par un ressort à lame courbé transversalement à la direction de flexion.

12. Système de rails profilés selon au moins l'une quelconque des revendications 3 à 11, **caractérisé en ce que** le profilé de couverture (3) est en outre maintenu de manière réglable en hauteur et/ou de manière pivotante par rapport au profilé de base (2).
